# DEMANDE DE BREVET EUROPEEN

(11) **EP 1 085 729 A1**
(43) Date de publication de la demande: **21.03.2001**
(21) Numéro de dépôt: 00402540.9
(22) Date de dépôt: 14.09.2000
(51) Int. Cl.: H04M 1/274, H04N 1/32

(54) **Procédé de configuration automatique d'un équipement téléphonique pour définir un préfixe de numérotation**

(30) Priorité: 16.09.1999 FR 9911589
(71) Demandeur: SAGEM SA, 75116 Paris (FR)
(72) Inventeur: Ruillon, Pierre, 95000 Cergy (FR); Auffray, Jean-Paul, 95800 Cergy Saint Christophe (FR)
(74) Mandataire: Bloch, Gérard

(57) **Abrégé**

Lors de sa mise en service, l'équipement (16) tente automatiquement d'appeler un numéro d'appel téléphonique, en y ajoutant un préfix de numérotation dont la valeur est extraite d'une liste de valeurs potentielles, afin de trouver, par tâtonnement dans la liste, une valeur pour laquelle la tentative d'appel aboutit et d'attribuer cette valeur au préfixe de numérotation.

L'invention s'applique bien aux télécopieurs.

## Description

Un réseau téléphonique local, tel qu'on en trouve dans la plupart des entreprises, comprend un autocommutateur privé, un PABX, reliant les équipements téléphoniques du réseau local à un réseau téléphonique externe, généralement public.

Pour effectuer un appel externe, les équipements téléphoniques du réseau local doivent composer le numéro d'appel téléphonique, précédé d'un préfixe de numérotation, par exemple "0". Certains équipements, notamment les télécopieurs, peuvent être configurés pour composer automatiquement ce préfixe de numérotation, pour chaque appel téléphonique sortant. Cette configuration est effectuée par un opérateur, lors de la mise en service de l'équipement. L'opérateur commande par exemple l'affichage d'une fenêtre de configuration, par sélection dans des menus, puis saisit manuellement la valeur du préfixe de numérotation. Cette opération, inhabituelle pour les utilisateurs de l'équipement, requiert parfois l'intervention d'un spécialiste La présente invention propose de simplifier la configuration des équipements téléphoniques pour définir un préfixe de numérotation.

A cet effet, l'invention concerne un procédé de configuration automatique d'un équipement téléphonique pour définir un préfixe de numérotation téléphonique, dans lequel, lors de sa mise en service, l'équipement tente automatiquement d'appeler un numéro d'appel téléphonique, en y ajoutant un préfix de numérotation dont la valeur est extraite d'une liste de valeurs potentielles, afin de trouver, par tâtonnement dans la liste, une valeur pour laquelle la tentative d'appel aboutit et d'attribuer cette valeur au préfixe de numérotation.

Ainsi, par tâtonnement, l'équipement trouve le bon préfixe, sans l'intervention d'un opérateur.

Avantageusement, l'équipement tente d'appeler ledit numéro d'appel téléphonique, sans préfixe de numérotation, et, si la tentative d'appel aboutit, il n'attribue aucune valeur au préfixe de numérotation.

Ainsi, dans le cas où l'équipement n'est pas relié à un autocommutateur privé, aucun préfixe de numérotation n'est défini, de sorte que pour chaque appel téléphonique, l'équipement numérote le numéro d'appel téléphonique sans y ajouter de préfixe de numérotation.

De préférence, le numéro d'appel téléphonique étant celui d'un serveur de configuration, lorsqu'une tentative d'appel aboutit, le serveur décroche et l'équipement détecte que le serveur a décroché.

Avantageusement, lors de sa mise en service, l'équipement détecte un courant d'alimentation et déclenche alors l'exécution de l'opération de configuration automatique pour définir un préfix de numérotation.

L'invention concerne également un équipement téléphonique, pour la mise en oeuvre du procédé ci-dessus, comprenant des moyens d'appel téléphonique, des moyens de configuration pour définir un préfixe de numérotation téléphonique et des moyens de mémorisation du préfixe de numérotation, caractérisé par le fait qu'il comprend des moyens de stockage d'un numéro d'appel téléphonique et d'une liste de valeurs potentielles de préfixe de numérotation, des moyens pour déclencher la configuration automatique de l'équipement, lors de sa mise en service, les moyens de configuration étant agencés pour commander au moins une tentative automatique d'appel du numéro d'appel mémorisé, avec un préfixe de numérotation dont la valeur est extraite de la liste, afin de trouver, par tâtonnement dans la liste, une valeur de préfixe pour laquelle la tentative d'appel aboutit, et d'enregistrer cette valeur dans les moyens de mémorisation du préfixe de numérotation.

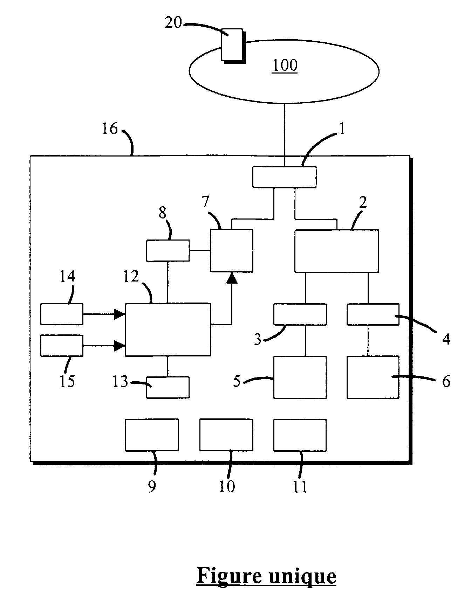

L'invention sera mieux comprise à l'aide de la description suivante du procédé de configuration et de l'équipement téléphonique, selon une forme de réalisation particulière de l'invention, en référence à la figure unique annexée qui représente un schéma bloc fonctionnel de l'équipement.

Dans l'exemple particulier de la description, l'équipement téléphonique est un télécopieur 16.

Le télécopieur 16 comprend une interface 1 de liaison à une ligne téléphonique, comportant un modem, un bloc 2 d'émission et de réception de télécopies, un bloc scanner 5, un bloc d'impression 6, un bloc d'appel téléphonique 7 et une interface homme-machine.

L'interface homme-machine comprend un clavier de saisie 9, un écran d'affichage 10 et un bloc d'interface utilisateur 11. Le clavier de saisie 9 comprend les éléments ordinaires d'un clavier de télécopieur. Le bloc 11 comporte une application d'interface utilisateur, permettant une communication entre le télécopieur 16 et un utilisateur, par affichage d'informations (messages, menus de commandes, etc.) sur l'écran 10.

Le bloc d'émission et de réception de télécopies 2 est relié à l'interface de liaison 1, à une mémoire 3 de stockage de télécopies en attente d'émission et à une mémoire 4 de stockage de télécopies reçues. Il est destiné à émettre et à recevoir des télécopies à travers un réseau téléphonique public 100, en l'espèce le réseau RTC (Réseau Téléphonique Commuté), suivant un protocole standard de transmission de télécopies, ici le protocole T30.

Le bloc scanner 5 et le bloc d'impression 6, respectivement reliés aux mémoires 3 et 4, sont destinés à scanner des documents de télécopie à émettre et à imprimer des télécopies reçues.

Le bloc d'appel téléphonique 7 est destiné à décrocher et à raccrocher la ligne téléphonique, et à générer des codes DTMF pour numéroter un numéro d'appel téléphonique. Le bloc d'appel 7 est relié à une mémoire 8 de mémorisation d'un préfixe de numérotation téléphonique. Pour chaque appel téléphonique sortant, le bloc d'appel 7 ajoute, le cas échéant, le préfixe de numérotation, mémorisé dans la mémoire 8, au numéro d'appel téléphonique composé.

Le télécopieur 16 comprend en outre un automate de configuration 12, pour définir un préfixe de numérotation téléphonique, une mémoire 13, explicitée plus loin, un détecteur de courant d'alimentation 14 et un détecteur 15 d'une signalisation spécifique d'indication de décroché téléphonique. L'automate 12 est relié à la mémoire 8, au bloc d'appel 7, à la mémoire 13 et aux deux détecteurs 14 et 15.

Il est également prévu une prise de raccordement au secteur, pour l'alimentation électrique du télécopieur 16, et ici un bouton marche/arrêt, pour commander la mise en marche, autrement dit la mise sous tension, et l'arrêt du télécopieur 16. Le détecteur 14 est destiné à détecter la mise sous tension du télécopieur 16, par détection d'un courant d'alimentation, et à déclencher la configuration automatique du télécopieur 16, pour définir un préfixe de numérotation, en cas de détection d'un courant d'alimentation.

La mémoire 13 stocke, d'une part, une liste préenregistrée de valeurs potentielles de préfixe de numérotation et, d'autre part, le numéro d'appel téléphonique d'un serveur de configuration 20 du réseau téléphonique public 100. La liste contient les valeurs de préfixe de numérotation, couramment utilisées ("0", "1", etc.). Le serveur de configuration 20, relié au réseau téléphonique public 100, est destiné, en cas de réception d'un appel téléphonique, à décrocher la ligne téléphonique et à émettre vers l'appelant une signalisation spécifique pour indiquer qu'il a décroché.

Le détecteur 15 est destiné à détecter la signalisation d'indication de décroché, émise par le serveur 20.

Lorsque le télécopieur 16 est mis en service, un opérateur le raccorde au secteur et le met en marche, en le mettant ainsi sous tension. Le détecteur 14 est destiné à détecter cette mise sous tension, autrement dit cette mise en service, du télécopieur 16 et à déclencher alors la configuration automatique du télécopieur 16, afin de définir un préfixe de numérotation.

L'automate de configuration 12 est destiné, lors de la mis en service du télécopieur 16, à vérifier si le télécopieur 16 est relié à un autocommutateur privé et, si tel est le cas, à rechercher, parmi les valeurs de préfixe de numérotation de la liste mémorisée dans la mémoire 8, une valeur pour laquelle les appels téléphoniques sortants, effectués par le télécopieur 16, aboutissent. Les différentes étapes de l'opération de configuration automatique, exécutées sous la commande de l'automate 12, sans l'intervention d'un opérateur, vont être explicitées ci-après, dans la description du procédé de configuration.

Le télécopieur 16 comprend en outre un bloc central de commande, en l'espèce un microprocesseur, auquel tous les éléments décrits ci-dessus sont reliés et destiné à commander le fonctionnement du télécopieur 16.

Après la description structurelle et fonctionnelle du télécopieur 16, le procédé de configuration automatique du télécopieur 16, correspondant à son fonctionnement, va maintenant être explicité.

Lors de la mise en service du télécopieur 16, un opérateur raccorde le télécopieur 16 à une ligne téléphonique puis au secteur, et met en marche le télécopieur 16, par appui sur le bouton marche/arrêt. Le détecteur 14 détecte la mise sous tension du télécopieur 16 et la signale à l'automate de configuration 12, en déclenchant ainsi l'exécution de l'opération de configuration automatique du télécopieur 16 pour définir un préfixe de numérotation. Les étapes de configuration, décrites ci-après, sont exécutées, de façon automatique, sans l'intervention de l'opérateur, sous la commande de l'automate 12.

Le bloc d'appel 7 tente d'abord d'appeler le numéro d'appel téléphonique du serveur de configuration 20, stocké dans la mémoire 13, sans y ajouter de préfixe de numérotation, afin de vérifier si le télécopieur 16 est ou non relié à un autocommutateur privé.

Si le télécopieur est relié au réseau téléphonique public 100, sans l'intermédiaire d'un autocommutateur privé, la tentative d'appel aboutit et le serveur 20 décroche et émet une signalisation spécifique d'indication de décroché téléphonique. Le détecteur 15 reçoit et détecte cette signalisation et signale à l'automate 12 que la tentative d'appel a abouti. L'automate 12 n'attribue alors aucune valeur au préfixe de numérotation de la mémoire 8 et n'enregistre donc aucun préfixe dans la mémoire 8 puis interrompt la configuration.

Si le télécopieur 16 est relié au réseau téléphonique public 100 par l'intermédiaire d'un autocommutateur privé, un PABX, la première tentative d'appel, sans préfixe de numérotation, n'aboutit pas. Le bloc d'appel téléphonique 7 tente alors d'appeler le numéro d'appel téléphonique du serveur 20, en y ajoutant un préfix de numérotation, dont la valeur est extraite de la liste de valeurs potentielles, enregistrée dans la mémoire 13. Si cette tentative d'appel n'aboutit pas, le bloc d'appel 7 tente d'appeler le serveur 20 en utilisant un préfixe de numérotation ayant une autre valeur, également extraite de la liste. Le bloc d'appel 7 réitère ainsi l'étape, consistant à tenter d'appeler le serveur 20 en utilisant un préfixe de numérotation, dont la valeur est extraite de la liste, jusqu'à trouver, par tâtonnement dans la liste, une valeur pour laquelle la tentative d'appel aboutit.

Lorsque la tentative d'appel aboutit, pour l'une des valeurs de préfixe de numérotation de la liste, le serveur 20 décroche et émet une signalisation spécifique d'indication de décroché. Le détecteur 15 reçoit et détecte cette signalisation et signale à l'automate 12 que la tentative d'appel a abouti. L'automate 12 attribue alors la valeur considérée au préfixe de numérotation, enregistre cette valeur dans la mémoire 8, et interrompt la configuration.

Le détecteur 15 pourrait être destiné à détecter un simple décroché téléphonique, par détection d'une interruption dans la diffusion de trains de sonnerie, ou encore la diffusion des trains de sonnerie eux-mêmes.

Dans une forme de réalisation perfectionnée, le télécopieur comprend un détecteur de courant de ligne téléphonique, relié à l'automate de configuration, destiné à vérifier si le télécopieur est bien connecté au réseau téléphonique. Dans ce cas, avant de commander l'exécution des étapes de configuration décrites ci-dessus, l'automate de configuration vérifie si le télécopieur est bien relié au réseau téléphonique, à l'aide du détecteur de courant de ligne. Dans le cas contraire, un message, s'affichant sur l'écran, pourrait demander à l'opérateur de vérifier la connexion du télécopieur à une ligne téléphonique.

On pourrait également prévoir que, lorsque le télécopieur est mis sous tension, l'automate de configuration vérifie si la configuration n'a pas déjà été effectuée, par exemple par lecture d'une indication mémorisée spécifiant si la configuration du télécopieur a déjà été effectuée ou non. Dans ce cas, l'opération de configuration automatique ne serait exécutée que dans le cas où la configuration n'a jamais été effectuée. Dans le cas où la configuration a déjà été effectuée, il pourrait être prévu de demander à l'opérateur s'il souhaite configurer à nouveau le télécopieur, par affichage d'un message sur l'écran.

Dans la description qui précède, la configuration automatique est déclenchée par le détecteur de courant d'alimentation, qui détecte la mise sous tension du télécopieur, et éventuellement par le détecteur de courant de ligne. En variante, on pourrait prévoir de déclencher la configuration automatique du préfixe de numérotation par appui sur une touche spécifique ou par sélection d'une commande dans des menus, ce qui ne nécessiterait qu'une manipulation simple de l'opérateur.

## Revendications

1. Procédé de configuration automatique d'un équipement téléphonique (16) pour définir un préfixe de numérotation téléphonique, dans lequel, lors de sa mise en service, l'équipement (16) tente automatiquement d'appeler un numéro d'appel téléphonique, en y ajoutant un préfix de numérotation dont la valeur est extraite d'une liste de valeurs potentielles, afin de trouver, par tâtonnement dans la liste, une valeur pour laquelle la tentative d'appel aboutit et d'attribuer cette valeur au préfixe de numérotation.

2. Procédé selon la revendication 1, dans lequel l'équipement (16) tente d'appeler ledit numéro d'appel téléphonique, sans préfixe de numérotation, et, si la tentative d'appel aboutit, il n'attribue aucune valeur au préfixe de numérotation.

3. Procédé selon l'une des revendications 1 et 2, dans lequel, le numéro d'appel téléphonique étant celui d'un serveur de configuration (20), lorsqu'une tentative d'appel aboutit, le serveur (20) décroche et l'équipement (16) détecte que le serveur (20) a décroché.

4. Procédé selon la revendication 3, dans lequel, lorsque le serveur (20) décroche, l'équipement (16) détecte l'interruption de la diffusion de trains de sonnerie.

5. Procédé selon la revendication 3, dans lequel, après avoir décroché, le serveur (20) émet vers l'équipement (16) une signalisation spécifique d'indication de décroché et l'équipement (16) détecte ladite signalisation.

6. Procédé selon l'une des revendications 1 et 2, dans lequel, lorsqu'une tentative d'appel aboutit, l'équipement détecte la diffusion de trains de sonnerie.

7. Procédé selon l'une des revendications 1 à 6, dans lequel, lors de sa mise en service, l'équipement (16) détecte un courant d'alimentation et déclenche alors l'exécution de l'opération de configuration automatique pour définir un préfix de numérotation.

8. Procédé selon l'une des revendications 1 à 7, dans lequel, avant d'exécuter l'opération de configuration automatique, pour définir un préfixe de numérotation, l'équipement (16) vérifie s'il n'est pas déjà configuré et ne commande l'exécution de l'opération de configuration automatique que dans le cas où il n'est pas déjà configuré.

9. Procédé selon l'une des revendications 1 à 8, dans lequel, l'équipement vérifie s'il est bien connecté à une ligne téléphonique, par détection d'un courant de ligne, avant d'exécuter l'opération de configuration automatique pour définir un préfixe de numérotation.

10. Equipement téléphonique, pour la mise en oeuvre du procédé de la revendication 1, comprenant des moyens d'appel téléphonique (7), des moyens de configuration (12), pour définir un préfixe de numérotation téléphonique, et des moyens (8) de mémorisation du préfixe de numérotation, caractérisé par le fait qu'il comprend des moyens (13) de stockage d'un numéro d'appel téléphonique et d'une liste de valeurs potentielles de préfixe de numérotation, des moyens (14) pour déclencher la configuration automatique de l'équipement, lors de sa mise en service, les moyens de configuration (12) étant agencés pour commander au moins une tentative automatique d'appel du numéro d'appel mémorisé, avec un préfixe de numérotation dont la valeur est extraite de la liste, afin de trouver, par tâtonnement dans la liste, une valeur de préfixe pour laquelle la tentative d'appel aboutit, et d'enregistrer cette valeur dans les moyens (8) de mémorisation du préfixe de numérotation.

11. Equipement selon la revendication 10, dans lequel les moyens de configuration (12) sont agencés pour commander une tentative automatique d'appel du numéro d'appel mémorisé, sans préfixe de numérotation, et pour n'enregistrer aucun préfixe de numérotation si la tentative d'appel aboutit.

12. Equipement selon l'une des revendications 10 et 11, dans lequel il est prévu des moyens (14) de détection d'un courant d'alimentation, destinés à déclencher la configuration automatique de l'équipement.

13. Equipement selon l'une des revendications 10 à 12, dans lequel il est prévu des moyens de détection d'un courant ligne téléphonique, destiné à vérifier si l'équipement est bien relié à une ligne téléphonique, avant d'exécuter la configuration automatique de l'équipement.
